# EUROPEAN PATENT SPECIFICATION

(11) **EP 4 207 217 B1**
(45) Date of publication and mention of the grant of the patent: **18.12.2024**
(21) Application number: 22819118.5
(22) Date of filing: 08.03.2022
(51) Int. Cl.: H01B 7/282, H01B 7/14, G02B 6/44, H01B 11/22

(54) **FLEXIBLE DIRECT-CURRENT SUBMARINE CABLE**
FLEXIBLES GLEICHSTROM-UNTERSEEKABEL
CÂBLE SOUS-MARIN À COURANT CONTINU FLEXIBLE

(30) Priority: 07.06.2021 CN 202110633003
(43) Date of publication of application: 05.07.2023
(73) Proprietor: Zhongtian Technology Submarine Cable Co., Ltd., Nantong, Jiangsu 226000 (CN)
(72) Inventor: XUE, Chi, Rudong County Nantong, Jiangsu 226463 (CN); XIE, Shuhong, Rudong County Nantong, Jiangsu 226463 (CN); YU, Hongmiao, Nantong, Jiangsu 226000 (CN); HU, Ming, Nantong, Jiangsu 226000 (CN); ZHANG, Hongliang, Nantong, Jiangsu 226000 (CN); YAN, Zhiyu, Nantong, Jiangsu 226000 (CN); YAN, Yan, Nantong, Jiangsu 226000 (CN); ZHAO, Youlin, Nantong, Jiangsu 226000 (CN); WANG, Liyuan, Nantong, Jiangsu 226000 (CN); WANG, Wenchao, Nantong, Jiangsu 226000 (CN)
(74) Representative: Boult Wade Tennant LLP
(86) International application number: PCT/CN2022/079743
(87) International publication number: WO 2022/257513

(56) References cited:
- CN-A- 104 851 509
- CN-A- 107 179 586
- CN-A- 113 314 261
- CN-U- 203 103 005
- CN-U- 210 006 533
- DE-A1- 19 837 602
- GB-A- 2 227 855
- US-A1- 2019 287 697

## Description

### TECHNICAL FIELD

The present disclosure relates to the field of cable, and in particular, to a flexible direct-current submarine cable.

### BACKGROUND

Flexible direct-current submarine cable is generally suitable for large-capacity and long-distance transmission projects, which requires a conductor with a large cross-sectional area. Due to limitations of the number of reels of a framed stranding machine and requirements of diameter of single wire, and a small filling coefficient of single wire conductor with a circular cross-section, the conductor with the circular cross-sectional has a small cross-sectional area, and furthermore, a segment conductor has a poor performance of water-blocking. Therefore, conductors of a high-voltage flexible direct-current cable are mostly special-shaped single wire conductors.

An existing flexible direct-current submarine cable generally includes a water-blocking conductor; an optical fiber unit; and a conductor shielding layer, an insulating layer, an insulating shielding layer, a water-blocking layer, a metal protective layer, an inner protective layer and an optical fiber protective layer and other layer, which are wrapped around an outer side of the water-blocking conductor, where the optical fiber unit is arranged in the optical fiber protective layer, and the water-blocking conductor is a special-shaped single wire conductor, and cross-sections of the single wire are mostly "S (Z)" shaped or trapezoidal.

Therefore, the structure of the above flexible direct-current submarine cable will lead to the increase of the outer diameter of the submarine cable and increase of the processing cost of the submarine cable. Moreover, since the optical fiber unit is close to the outermost layer of the submarine cable, the optical fiber unit is more susceptible to force, resulting in waveform abnormality or even interruption. In addition, the conductor single wire in the above submarine cable uses a single wire with a "S (Z)" shaped or trapezoidal cross section, but production speed of the single wire with the "S (Z)" shaped cross section is relatively slow, which will reduce production efficiency of the submarine cable, and the single wire with the trapezoidal cross section is easy to turn over in the production process, affecting the performance of water-blocking of the submarine cable. The prior art document GB2227855A discloses a submarine cable with a core comprising an optical fibre cable. The core comprises a metallic, longitudinal strength member matrix in which a plurality of optical fibres are housed in internal, hermetically-isolated longitudinal passages which are disposed equi-radially in a peripheral region of the matrix.

### SUMMARY

Embodiments of the present application provide a flexible direct-current submarine cable, which has advantages of low production cost, high production efficiency and good performance of water-blocking.

The present application provides a flexible direct-current submarine cable, including a water-blocking conductor and an optical fiber assembly, where the water-blocking conductor wraps around an outer side of the optical fiber assembly along a circumferential direction of the optical fiber assembly; the water-blocking conductor includes a conductor core wrapped around the outer side of the optical fiber assembly, the conductor core includes at least two conductor layers including a first conductor layer and a second conductor layer, the first conductor layer and the second conductor layer are alternately provided along a radial direction of the optical fiber assembly, the first conductor layer is formed by stranding a plurality of first metal wires arranged along a circumferential direction of the optical fiber assembly, the second conductor layer is formed by stranding a plurality of second metal wires arranged along the circumferential direction of the optical fiber assembly; the first metal wires each have a concave part and a convex part arranged sequentially in the radial direction of the optical fiber assembly, and both a concave direction of the concave part and a convex direction of the convex part are along the circumferential direction of the optical fiber assembly, and the convex part of one of two adjacent first metal wires is stuck into the concave part of the other; the second metal wires each have two straight side wall surfaces that are opposite to each other, the straight side wall surfaces extend along the radial direction of the optical fiber assembly, and the straight side wall surfaces of two adjacent second metal wires fit each other.

Optionally, in the flexible direct-current submarine cable provided in the present application, projection positions of the first metal wires and the second metal wires in a radial direction of the flexible direct-current submarine cable are staggered with each other, in adjacent first and second conductor layers.

Optionally, in the flexible direct-current submarine cable provided in the present application, the first metal wires in adjacent first and second conductor layers are pressed against at least two adjacent second metal wires,; or, the second metal wires in adjacent first and second conductor layers are pressed against at least two adjacent first metal wires.

Optionally, in the flexible direct-current submarine cable provided in the present application, stranding directions of adjacent first and second conductor layers are opposite.

Optionally, in the flexible direct-current submarine cable provided in the present application, in the at least two conductor layers, both a conductor layer in contact with the optical fiber assembly and a conductor layer located on a surface of the conductor core are the first conductor layer.

Optionally, in the flexible direct-current submarine cable provided in the present application, the conductor core further includes a third conductor layer that is a single-layer or a multi-layer, the third conductor layer is formed by stranding a plurality of third metal wires, and a cross section of the third metal wires in the radial direction of the flexible direct-current submarine cable is circular.

Optionally, in the flexible direct-current submarine cable provided in the present application, the first metal wires in each first conductor layer are of the same shape and equal size, and the second metal wires in each second conductor layer are of the same shape and equal size.

Optionally, in the flexible direct-current submarine cable provided in the present application, the concave part is a concave arc segment and the convex part is a convex arc segment; or the concave part has a first extension segment extending in the radial direction of the flexible direct-current submarine cable, the convex part has a second extension segment extending in the radial direction of the flexible direct-current submarine cable, and the first extension segment and the second extension segment are parallel to each other.

Optionally, in the flexible direct-current submarine cable provided in the present application, the first extension segment of the concave part is parallel to the second extension segment of the convex part; the first metal wires further comprise a transition segment connected between the first extension segment and the second extension segment, and an extension direction of the transition segment is perpendicular to an extension direction of the first extension segment.

Optionally, in the flexible direct-current submarine cable provided in the present application, the optical fiber assembly includes an optical fiber unit, the optical fiber unit includes a plurality of optical fibers, a first water-blocking filling unit and a first metal tube, the plurality of optical fibers are located in the first metal tube, the first water-blocking filling unit is filled between the plurality of optical fibers and the first metal tube, and the optical fibers are not in contact with the first metal tube.

Optionally, in the flexible direct-current submarine cable provided in the present application, there are a plurality of optical fiber units, the plurality of optical fiber units each include a first optical fiber unit located in a center of the water-blocking conductor and a plurality of second optical fiber units uniformly wrapped around a periphery of the first optical fiber unit, a center of the first optical fiber unit coincides with a center of the optical fiber assembly, the second optical fiber units abut against the first optical fiber unit, and two adjacent second optical fiber units abut against each other.

Optionally, in the flexible direct-current submarine cable provided in the present application, the optical fiber assembly further includes a plurality of filling units, a second metal tube and a second water-blocking filling unit; the filling units are arranged corresponding to the second optical fiber units, and the filling units are located between adjacent second optical fiber units, the second metal tube is wrapped around outer sides of the plurality of filling units and of the optical fiber unit, and the filling units and the second optical fiber units each abut against an inner wall of the second metal tube; the second water-blocking filling unit is filled between the plurality of optical fiber units, the plurality of filling units and the second metal tube.

Optionally, in the flexible direct-current submarine cable provided in the present application, the optical fiber assembly further includes a first water-blocking wrapping tape located inside the second metal tube.

Optionally, in the flexible direct-current submarine cable provided in the present application, the water-blocking conductor further includes a second water-blocking wrapping tape wrapped around an outer side of the conductor core.

Optionally, in the flexible direct-current submarine cable provided in the present application, the water-blocking conductor further includes a protective layer wrapped around an outer side of the second water-blocking wrapping tape layer, and the protective layer is peelably arranged on the outer side of the second water-blocking wrapping tape layer.

The flexible direct-current submarine cable provided in the present application includes a water-blocking conductor and an optical fiber assembly, the water-blocking conductor includes a conductor core wrapped around an outer side of the optical fiber assembly, the conductor core includes at least two conductor layers including a first conductor layer and a second conductor layer, the first conductor layer and the second conductor layer are alternately provided along a radial direction of the optical fiber assembly, the first conductor layer is formed by stranding a plurality of first metal wires arranged along a circumferential direction of the optical fiber assembly, the second conductor layer is formed by stranding a plurality of second metal wires arranged along the circumferential direction of the optical fiber assembly; the first metal wires each have a concave part and a convex part arranged sequentially in the radial direction of the optical fiber assembly, and a concave direction of the concave part and a convex direction of the convex part are along a circumferential direction of the optical fiber assembly, and the convex part of one of two adjacent first metal wires is stuck into the concave part of the other; the second metal wires each have two straight side wall surfaces that are opposite, the straight side wall surfaces extend along the radial direction of the optical fiber assembly, and the straight side wall surfaces of two adjacent second metal wires fit each other. The flexible direct-current submarine cable in the present application has advantages of low production cost, high production efficiency and good performance of water-blocking.

The structure, other application purposes and beneficial effects of the present application will be obvious by the description of the preferred embodiments with reference to the drawings.

### BRIEF DESCRIPTION OF DRAWINGS

In order to illustrate the technical solutions of embodiments of the present application or prior art more clearly, the drawings that need to be used in the embodiments will be briefly introduced hereunder. It is obvious that the drawings described below only show certain embodiments of the present application, and for those ordinarily skilled in the art, other relevant drawings also can be obtained according to these drawings without any creative work.
FIG. 1 is a schematic structural diagram of a flexible direct-current submarine cable provided by an embodiment of the present application.
FIG. 2a is a first schematic structural diagram of an optical fiber assembly in a flexible direct-current submarine cable provided by an embodiment of the present application.
FIG. 2b is a second schematic structural diagram of the optical fiber assembly in a flexible direct-current submarine cable provided by an embodiment of the present application.
FIG. 2c is a third schematic structural diagram of the optical fiber assembly in a flexible direct-current submarine cable provided by an embodiment of the present application.
FIG. 3a is a schematic structural diagram of a first combination of a water-blocking conductor and an optical fiber assembly in a flexible direct-current submarine cable provided by an embodiment of the present application.
FIG. 3b is a schematic structural diagram of a second combination of the water-blocking conductor and the optical fiber assembly in a flexible direct-current submarine cable provided by an embodiment of the present application.
FIG. 3c is a schematic structural diagram of a third combination of the water-blocking conductor and the optical fiber assembly in a flexible direct-current submarine cable provided by an embodiment of the present application.
FIG. 3d is a schematic structural diagram of a second metal wire in a flexible direct-current submarine cable provided by an embodiment of the present application.
FIG. 3e is a schematic structural diagram of a first metal wire in a flexible direct-current submarine cable provided by an embodiment of the present application.
FIG. 3f is a schematic structural diagram of a fourth combination of the water-blocking conductor and the optical fiber assembly in a flexible direct-current submarine cable provided by an embodiment of the present application.
FIG. 3g is a schematic structural diagram of a fifth combination of the water-blocking conductor and the optical fiber assembly in a flexible direct-current submarine cable provided by an embodiment of the present application.

Illustration of reference signs of the accompanying drawings:
1- water-blocking conductor; 11- conductor core; 111- conductor layer; 111a- first conductor layer; 111b- second conductor layer; 111c- third conductor layer; 12- second water-blocking wrapping tape; 13- protective layer; 2- optical fiber assembly; 21- optical fiber unit; 21a- first optical fiber unit; 21b- second optical fiber unit; 211- optical fiber; 212- first water-blocking filling unit; 213- first metal tube; 22- filling unit; 23- second metal tube; 24-second water-blocking filling unit; 25- first water-blocking wrapping tape; 3- conductor shielding layer; 4- insulating layer; 5- insulating shielding layer; 6- water-blocking layer; 7-metal protective layer; 8- outer protective layer; 9- inner lining layer; 10- armor layer; 20-outer serving layer; 30- first metal wire;
31- concave part; 311- first extension segment; 32- convex part; 321- second extension segment; 33- transition segment; 40- second metal wire; 41- straight side wall surface; 42- curved side wall; 50- third metal wire.

### DESCRIPTION OF EMBODIMENTS

In order to make the purpose, technical solution and advantages of the embodiments of the present application more clear, the technical solution in the embodiment of the present application will be described clearly and completely in combination with the accompanying drawings in the embodiments of the present application. Obviously, the embodiments described are some embodiments of the present application, but not all embodiments.

Based on the embodiments in the present application, all other embodiments obtained by those skilled in the field without creative work fall within the protection scope of the present application. The following embodiments and the features in the embodiments may be combined with each other without conflict.

In the description of the present application, it should be understood that the orientations or positional relationships indicated by the terms "center", "longitudinal", "lateral", "length", "width", "thickness", "above", "below", "front", "back", "left", "right", "vertical", "horizontal", "top", "bottom", "inside", "outside", "clockwise", "counterclockwise", "axial", "radial" and "circumferential" are based on the orientations or position relationships shown in the accompanying drawings, and are only intended to facilitate the description of the present application and to simplify the description, rather than indicating or implying that the device or element referred to must have a specific orientation, constructed and operated in a specific orientation, and therefore cannot be understood as a limitation to the present application.

In the present application, unless otherwise clearly specified and defined, the terms "installation", "junction", "connection" and "fixed" shall be understood in a broad sense, for example, they can be a fixed connection, a detachable connection, or an integrated connection; they can be directly connected, or indirectly connected through an intermediate medium, or they can be the internal connection of two elements or the interaction between two elements. For those skilled in the field, the specific meanings of the above terms in the present application can be understood according to the specific circumstances.

It should be stated that in the description of the present application, the terms "first" and "second" are only used to facilitate the description of different components, it cannot be understood to indicate or imply sequential relations, relative importance or implicitly indicate the number of indicated technical features. Thus, a feature defined with "first" and "second" may include at least one such feature either expressly or implicitly.

An existing flexible direct-current submarine cable generally includes a water-blocking conductor; an optical fiber unit; and a conductor shielding layer, an insulating layer, an insulating shielding layer, a water-blocking layer, a metal protective layer, an inner protective layer and an optical fiber protective layer and other layer, which are covered on outer side of the water-blocking conductor; where the optical fiber unit is arranged in the optical fiber protective layer, the water-blocking conductor is a special-shaped single wire conductor, and cross-sections of the single wire mostly are "S (Z)" shaped or trapezoidal.

Therefore, the structure of the above flexible direct-current submarine cable will lead to increase of the outer diameter of the submarine cable and increase of the processing cost of the submarine cable. Moreover, since the optical fiber unit is close to the outermost layer of the submarine cable, the optical fiber unit is more susceptible to force, resulting in waveform abnormality or even interruption. In addition, the conductor single wire in the existing submarine cable is a single wire with a "S (Z)" shaped or trapezoidal cross section, but a production speed of the single wire with the "S (Z)" shaped cross section is relatively slow, which will reduce production efficiency of the submarine cable, and the single wire with the trapezoidal cross section is easy to turn over during the production process, affecting the performance of water-blocking of the submarine cable.

Therefore, the present application provides a flexible direct-current submarine cable, where the optical fiber unit is arranged inside the water-blocking conductor to avoid that the water-blocking conductor and the optical fiber unit are arranged separately, thereby reducing the processing cost of the submarine cable. Besides, the optical fiber unit is arranged inside the water-blocking conductor, which can reduce the force on the optical fiber unit and prevent the interruption of the optical fiber unit. In addition, the water-blocking conductor in the present application combines a conductor layer formed by stranded "S (Z)" shaped metal wires with a conductor layer formed by stranded trapezoidal metal wires, which not only solves the problem the metal wire with the "S (Z)" shaped cross section alone has a slow production speed, but also solves the problem that the metal wire with the trapezoidal cross section alone is easy to turn over, and thus not only can improve the production efficiency of the submarine cable, but also can ensure that the submarine cable has a good performance of water-blocking.

The following is a detailed description of the present application in combination with the accompanying drawings and specific embodiments.

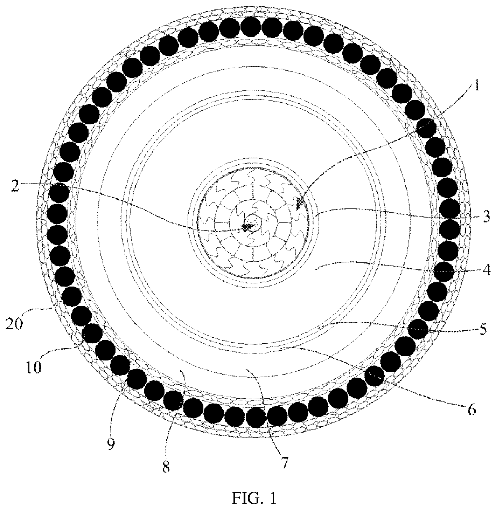

FIG. 1 is a schematic structural diagram of a flexible direct-current submarine cable provided by an embodiment of the present application.

As shown in FIG. 1, the present application provides a flexible direct-current submarine cable, including a water-blocking conductor 1, an optical fiber assembly 2, a conductor shielding layer 3, an insulating layer 4, an insulating shielding layer 5, a water-blocking layer 6, a metal protective layer 7, an outer protective layer 8, an inner lining layer 9, an armor layer 10, and an outer serving layer 20, where the conductor shielding layer 3, the insulating layer 4, the insulating shielding layer 5, the water-blocking layer 6, the metal protective layer 7, the outer protective layer 8, the inner lining layer 9, the armor layer 10, and the outer serving layer 20 are sequentially coated on the outer side of the water-blocking conductor 1. In order to reduce the processing cost of the submarine cable provided in the present application and to prevent the interruption of the optical fiber assembly 2, in the specific implementation modes of the embodiments of the present application, the water-blocking conductor 1 wraps outer side of the optical fiber assembly 2 along a circumferential direction of the optical fiber assembly 2, and centers of the optical fiber assembly 2 and the water-blocking conductor 1 coincide with the center of the submarine cable. Setting the optical fiber assembly 2 inside the water-blocking conductor 1, compared with setting the optical fiber assembly 2 on an outer layer structure the water blocking conductor 1, can avoid further molding of the outer structure to form an accommodation space for accommodating the optical fiber assembly 2, and thus reduce the processing cost of the submarine cable; in addition, when the optical fiber assembly 2 is located inside the water blocking conductor 1, the force acting on the optical fiber assembly 2 in the radial direction of the submarine cable is small, which can prevent the interruption of the optical fiber assembly 2.

It should be stated that the above insulating layer 4 may be a cross-linked polyethylene (Cross linked polyethylene, CLPE) insulating layer; the water-blocking layer 6 may be a semi-conductive water-blocking tape, and the semi-conductive water-blocking tape may be compounded of a semi-conductive nonwoven and a water-absorbent resin; the metal protective layer 7 may be made of plumbum or other alloy; and the outer protective layer 8 may be a polyethylene (polyethylene, PE) protective layer; the inner lining layer 9 may be a polypropylene (polypropylene, PP) inner lining layer; the armor layer 10 may include a plurality of steel wires that stranded together and with a circular cross-section in a radial direction of the submarine cable, and asphalt filled between the plurality of steel wires; the outer serving layer 20 may be a PP outer serving layer; here, there is no specific restriction on other type of material of the layer structure wrapped outside the water-blocking conductor 1.

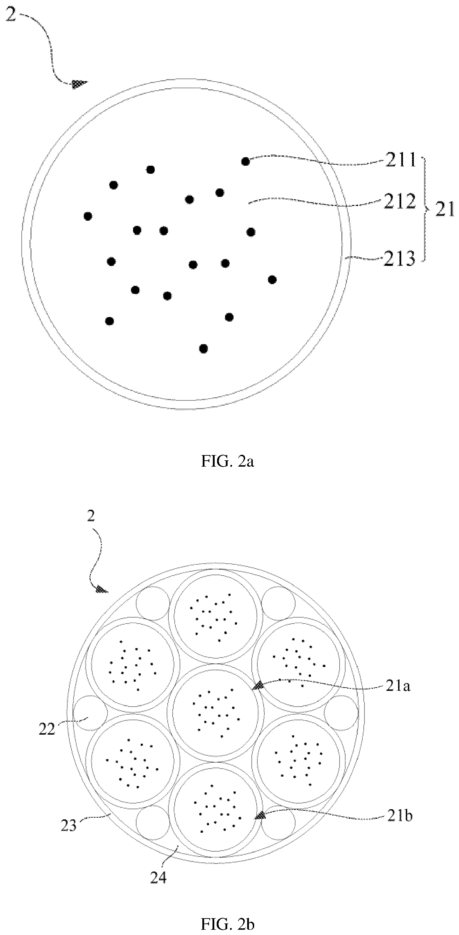

FIG. 2a is a first schematic structural diagram of the optical fiber assembly in the flexible direct-current submarine cable provided by an embodiment of the present application. FIG. 2b is a second schematic structural diagram of the optical fiber assembly in the flexible direct-current submarine cable provided by an embodiment of the present application.

As shown in FIGS. 2a and 2b, in some specific implementation modes, the optical fiber assembly 2 includes an optical fiber unit 21, the optical fiber unit 21 includes a plurality of optical fibers 211, a first water-blocking filling unit 212 and a first metal tube 213. The plurality of optical fibers 211 are located inside the first metal tube 213. Here, there is no specific restriction on the arrangement of the plurality of optical fibers 211 in the first metal tube 213. The first water-blocking filling unit 212 is filled between the plurality of optical fibers 211 and the first metal tube 213, and the optical fibers 211 and the first metal tube 213 are not in contact with each other.

Further, the above optical fibers 211 are made of glass or plastic, the above first water-blocking filling unit 212 may be a water-blocking grease, such as asphalt water-blocking grease, and the above first metal tube 213 may be a copper tube; here, other types and materials of the optical fibers 211, the first water-blocking filling unit 212 and the first metal tube 213 are not specifically limited.

It should be stated that in the actual production process, according to different structures of the submarine cable itself, the optical fiber assembly 2 may include different numbers of optical fibers 211, and when the number of optical fibers 211 is less than or equal to a preset number, the optical fiber assembly 2 includes an optical fiber unit 21, and when the number of optical fibers 211 is greater than the preset number, the optical fiber assembly 2 may include a plurality of optical fiber units 21. The following is a specific introduction of the optical fiber assembly 2 with different numbers of optical fibers 211.

As shown in FIG. 2a, when the number of optical fibers 211 is less than or equal to the preset number, the optical fiber assembly 2 includes one optical fiber unit 21, and at this time, the center of the optical fiber unit 21 is the center of the optical fiber assembly 2 and also the center of the water-blocking conductor 1.

As shown in FIG. 2b, when the number of optical fibers 211 is greater than the preset number, there are a plurality of optical fiber units 21, and at this time, the plurality of optical fiber units 21 include a first optical fiber unit 21a located in the center of the water-blocking conductor 1 and a plurality of second optical fiber units 21b uniformly wound around the periphery of the first optical fiber unit 21a. The center of the first optical fiber unit 21a coincides with the center of the water-blocking conductor 1 and the center of the optical fiber assembly 2. The second optical fiber units 21b abut against the first optical fiber unit 21a, and two adjacent second optical fiber units 21b are abutted against each other.

In a specific implementation mode of the present embodiment, the preset number of optical fibers 211 may be 96, that is, when the total number of optical fibers 211 is less than or equal to 96, the optical fiber assembly 2 includes one optical fiber unit 21; when the total number of optical fibers 211 is greater than 96, the optical fiber assembly 2 includes a plurality of optical fiber units 21.

As shown in FIG. 2b, when the total number of optical fibers 211 is greater than 96, the optical fiber assembly 2 further includes a plurality of filling units 22, a second metal tube 23 and a second water-blocking filling unit 24, where the filling units 22 are arranged corresponding to the second optical fiber units 21b, and the filling unit 22s are located between adjacent second optical fiber units 21b, and the second metal tube 23 is wrapped around the outer sides of the plurality of filling units 22 and the optical fiber units 21, and the filling units 22 and the second optical fiber units 21b each abut against the inner wall of the second metal tube 23; the second water-blocking filling unit is filled between the plurality of optical fiber units 21, the plurality of filling units 22 and the second metal tube 23.

It should be stated that the above filling units 22 may be stranded from steel wires, the above second metal tube 23 is a copper tube, and the second water-blocking filling unit 24 may also be a water-blocking grease, such as asphalt water-blocking grease; here, there is no specific restriction on other materials or types of the filling units 22, the second metal tube 23 and the second water-blocking filling unit 24.

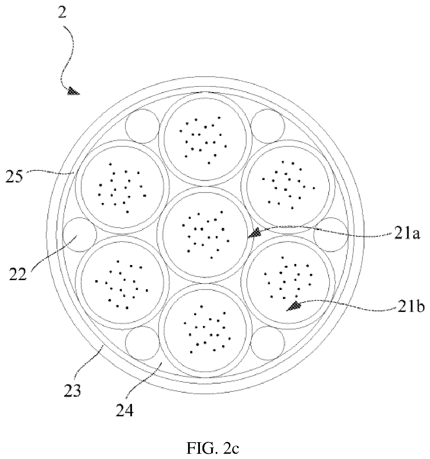

FIG. 2c is a third schematic structural diagram of the optical fiber assembly in the flexible direct-current submarine cable provided by an embodiment of the present application.

As shown in FIG. 2c, in order to improve the longitudinal water-blocking performance of the optical fiber assembly 2, that is, to improve the performance of water-blocking of the optical fiber assembly 2 in the radial direction of the submarine cable, in some optional implementation modes, the optical fiber assembly 2 further includes a first water-blocking wrapping tape 25, which is located inside the second metal tube 23.

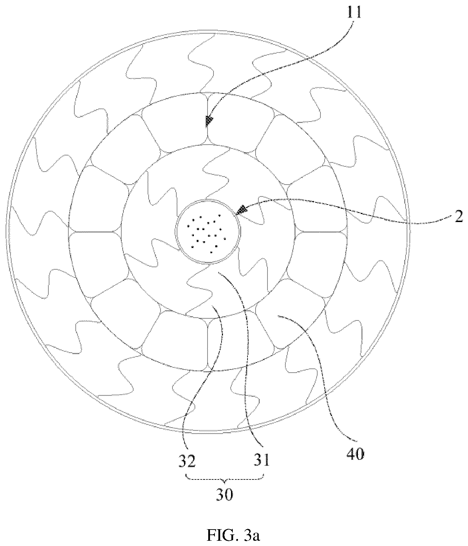

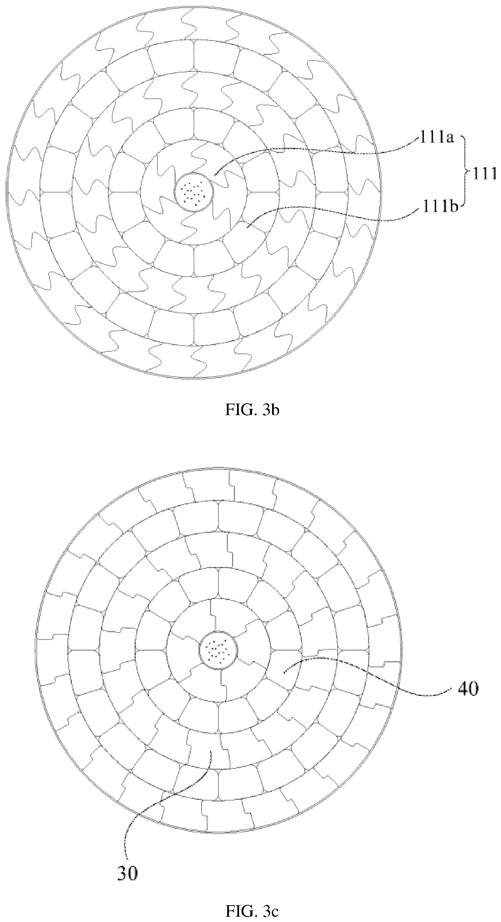

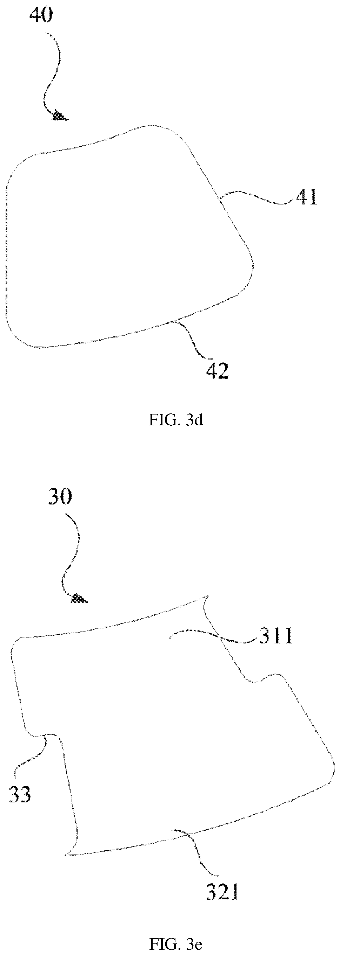

FIG. 3a is a first schematic structural diagram of a combination of the water-blocking conductor and the optical fiber assembly in the flexible direct-current submarine cable provided by an embodiment of the present application. FIG. 3b is a second schematic structural diagram of a combination of the water-blocking conductor and the optical fiber assembly in the flexible direct-current submarine cable provided by an embodiment of the present application. FIG. 3c is a third schematic structural diagram of a combination of the water-blocking conductor and the optical fiber assembly in the flexible direct-current submarine cable provided by an embodiment of the present application. FIG. 3d is a schematic structural diagram of a second metal wire in the flexible direct-current submarine cable provided by an embodiment of the present application.

As shown in FIGS. 3a to 3d, in order to improve the production efficiency of the flexible direct-current submarine cable and ensure that the flexible direct-current submarine cable has better performance of water-blocking, in a specific implementation mode of the present application, the water-blocking conductor 1 includes a conductor core 11 wrapping around outer side of the optical fiber assembly 2, and the conductor core 11 includes at least two conductor layers 111, the at least two conductor layers 111 include a first conductor layer 111a and a second conductor layer 111b. The first conductor layer 111a and the second conductor layer 111b are alternately provided along a radial direction of the optical fiber assembly 2, the first conductor layer 111a is formed by stranding a plurality of first metal wires 30 arranged along a circumferential direction of the optical fiber assembly 2, the second conductor layer 111b is formed by stranding a plurality of second metal wires 40 arranged along the circumferential direction of the optical fiber assembly 2; the first metal wire 30 has a concave part 31 and a convex part 32 arranged sequentially in the radial direction of the optical fiber assembly 2, and concave direction of the concave part 31 and convex direction of the convex part 32 are along the circumferential direction of the optical fiber assembly 2, and the convex part 32 of one of two adjacent first metal wires 30 is stuck into the concave part 31 of the other; the second metal wire 40 has two opposite straight side wall surfaces 41, the straight side wall surfaces 41 extend along the radial direction of the optical fiber assembly 2, and the straight side wall surfaces 41 of two adjacent second metal wires 40 fit each other. In the flexible direct-current submarine cable provided by the embodiment of the present application, alternately combining the first conductor layer 111a formed by stranding a plurality of first metal wires 30 and the second conductor layer 111b formed by stranding a plurality of second metal wires 40 not only can improve the production efficiency of the submarine cable, but also can ensure that the submarine cable has a good performance of water-blocking.

In a specific implementation mode of the present embodiment, the second metal wire 40 further has two opposite curved side walls 42, where the length of the curved side walls 42 near the center of the submarine cable in the circumferential direction of the submarine cable is less than that of the curved side walls 42 away from the center of the submarine cable in the circumferential direction of the submarine cable.

It should be stated that in a specific implementation mode of the present embodiment, in order to improve the performance of longitudinal water-blocking of the submarine cable, a water-blocking glue is filled between the water-blocking conductor 1 and the optical fiber assembly 2, and the water-blocking glue is also filled between adjacent conductor layers 111.

In a specific implementation mode of the present embodiment, among at least two conductor layers 111, the conductor layer 111 in contact with the optical fiber unit 21 and the conductor layer 111 located on the surface of the conductor core 11 are both the first conductor layers 111a.

In order to facilitate the processing of the first metal wire 30 and the second metal wire 40, and to facilitate the stranding of a plurality of first metal wires 30 and a plurality of second metal wires 40, in a specific implementation mode of the present embodiment, the first metal wires 30 in each first conductor layer 111a each have the same shape and size, and the second metal wires 40 in each second conductor layer 111b each have the same shape and size; that is, the number of the first metal wires 30 in the first conductor layer 111a near the center of the submarine cable is less than that of the first metal wires 30 in the first conductor layer 111a away from the center of the submarine cable, and the number of the second metal wires 40 in the second conductor layer 111b near the center of the submarine cable is less than that of the second metal wires 40 in the second conductor layer 111b away from the center of the submarine cable.

Further, in order to facilitate the processing of the first metal wires 30 and the second metal wires 40, a transition connection is used at the connections of segments of the first metal wires 30 and the second metal wires 40, so that it is not only convenient for processing, but also convenient to fill a water-blocking glue between the first conductor layer 111a and the second conductor layer 111b.

It should be stated that in a specific implementation process, the number of the first metal wires 30 included in the first conductor layer 111a and the number of the second metal wires 40 included in the second conductor layer 111b can be selected according to a specific stranding device and the performance of the submarine cable. As an example, as shown in FIG. 3a, the conductor core 11 includes four conductor layers 111, including two first conductor layers 111a and two second conductor layers 111b, the number of the first metal wires 30 in the first conductor layer 111a near the center of the submarine cable may be less than or equal to 12, and the number of the second metal wires 40 in the second conductor layer 111b near the center of the submarine cable may be less than or equal to 18, and the number of the first metal wires 30 in the first conductor layer 111a away from the center of the submarine cable may be less than or equal to 24, and the number of the second metal wires 40 in the second conductor layer 111b away from the center of the submarine cable may be less than or equal to 30.

In order to ensure that the second metal wires 40 is not easily turned over during stranding, in some optional implementation modes, in adjacent first and second conductor layers 111a, 111b, projection positions of the first metal wires 30 and the second metal wires 40 in a radial direction of the flexible direct-current submarine cable are staggered with each other, that is to say, in adjacent first and second conductor layers 111a, 111b, the first metal wires 30 are pressed against at least two adjacent second metal wires 40; or, in adjacent first and second conductor layers 111a, 111b, the second metal wires 40 are pressed against at least two adjacent first metal wires 30. In this way, it is possible to prevent the edges of the first metal wires 30 in the circumferential direction of the submarine cable from coinciding with the edges of the second metal wires 40 in the circumferential direction of the submarine cable, ensuring that the second metal wires 40 do not turn over easily; it should be stated that the above "turn over" can be understood as a 90° rotation of the second metal wires 40.

In order to prevent an outer conductor layer 111 from falling into a gap of an inner conductor layer 111 during the stranding process, in a specific implementation mode of the present embodiment, stranding directions of adjacent first and second conductor layers 111a, 111b are opposite, thus ensuring the flatness of the surface of the submarine cable so as to meet the standard requirements.

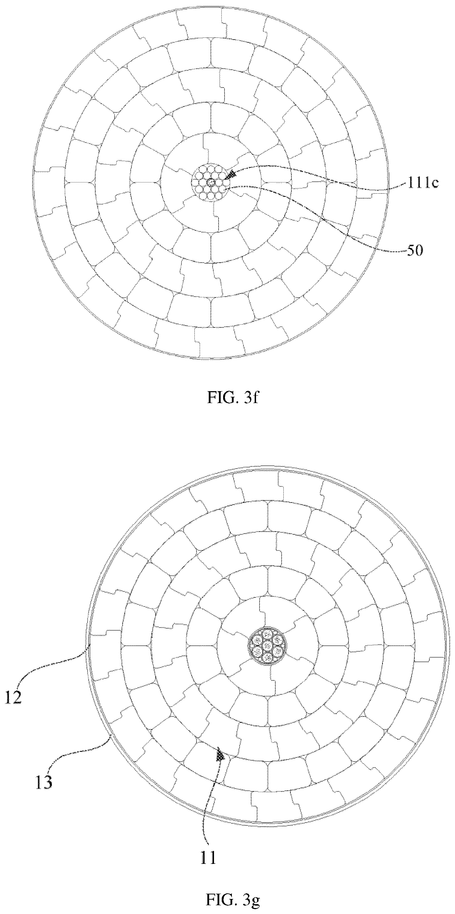

FIG. 3e is a schematic structural diagram of the first metal wire in the flexible direct-current submarine cable provided by an embodiment of the present application. FIG. 3f is a fourth schematic structural diagram of a combination of the water-blocking conductor and the optical fiber assembly in the flexible direct-current submarine cable provided by an embodiment of the present application.

As shown in FIG. 3f, in order to avoid a small size of the first metal wires 30 or the second metal wires 40, which is not conducive to processing, in some optional implementation modes, the conductor core 11 further includes a third conductor layer 111c, the third conductor layer 111c is a single-layer or a multi-layer, the third conductor layer 111c is formed by stranding a plurality of third metal wires 50, and the shapes of the cross sections of the third metal wires 50 in the radial direction of the flexible direct-current submarine cable are circular. In this way, by setting the third conductor layer 111c formed by stranding a plurality of third metal wires 50 with circular cross sections, the defect that it is not convenient to process and shape the first metal wire 30 or the second metal wire 40 can be overcome.

As shown in FIGS. 3a and 3b, in some optional implementation modes, the concave part 31 is a concave arc segment and the convex part 32 is a convex arc segment, so that the cross section of the first metal wire 30 in the radial direction of the submarine cable is in "S" shape.

In other optional implementation modes, as shown in FIGS. 3c, 3e and 3f, the concave part 31 has a first extension segment 311 extending in a radial direction of the flexible direct-current submarine cable, the convex part 32 has a second extension segment 321 extending in the radial direction of the flexible direct-current submarine cable, and the first extension segment 311 and the second extension segment 321 are parallel to each other. Further, the first metal wire 30 further includes a transition segment 33 connected between the first extension segment 311 and the second extension segment 321, and an extension direction of the transition segment 33 is perpendicular to an extension direction of the first extension segment 311.

FIG. 3g is a fifth schematic structural diagram of a combination of the water-blocking conductor and the optical fiber assembly in the flexible direct-current submarine cable provided by an embodiment of the present application.

As shown in FIG. 3g, in order to further enhance the water-blocking effect of the water-blocking conductor 1, the water-blocking conductor 1 further includes a second water-blocking wrapping tape 12 wrapping around outer side of the conductor core 11.

It should be stated that the above first water-blocking wrapping tape 25 and the above second water-blocking wrapping tape 12 are both formed by wrapping with a layer of semi-conductive water-blocking tape and a layer of semi-conductive binder tape, and an overlap rate of the semi-conductive water-blocking tape and semi-conductive binder tape is 20%-30%. In order to further enhance the effect of water-blocking of the first water-blocking wrapping tape 25 and the second water-blocking wrapping tape 12, the semi-conductive water-blocking tape and the semi-conductive binder tape should be staggered at the overlap regions. Here, there is no specific restriction on the structure and forming mode of the first water-blocking wrapping tape 25 and the second water-blocking wrapping tape 12.

In order to ensure that the water-blocking conductor 1 is not damaged after processing, the water-blocking conductor 1 further includes a protective layer 13 wrapping around the outer side of the second water-blocking wrapping tape 12, and the protective layer 13 is peelably arranged outside the second water-blocking wrapping tape 12. During the manufacture of the flexible direct-current submarine cable provided by the present embodiment, after the water-blocking conductor 1 is formed, the protective layer 13 can be stripped off for further processing and molding.

It should be stated that the above protective layer 13 is formed by two layers of non-woven tapes by wrapping, and the overlap rate of each layer of the non-woven tapes is 40%-50%. In order to enhance the effect of water-blocking of the protective layer 13, the two layers of non-woven tapes should be staggered at the overlap regions. In addition, in order to successfully remove the protective layer 13 from the second water-blocking wrapping tape 12, a wrapping direction of the protective layer 13 is opposite to that of the second water-blocking wrapping tape 12.

The flexible direct-current submarine cable provided in the present application includes a water-blocking conductor and an optical fiber assembly, the water-blocking conductor is wrapped around a circumferential outer side of the optical fiber assembly; the water-blocking conductor includes a conductor core wrapped around the outer side of the optical fiber assembly, the conductor core includes at least two conductor layers including a first conductor layer and a second conductor layer, the first conductor layer and the second conductor layer are alternately provided along a radial direction of the optical fiber assembly, the first conductor layer is formed by stranding a plurality of first metal wires arranged along a circumferential direction of the optical fiber assembly, the second conductor layer is formed by stranding a plurality of second metal wires arranged along the circumferential direction of the optical fiber assembly; the first metal wires have a concave part and a convex part arranged sequentially in the radial direction of the optical fiber assembly, and both a concave direction of the concave part and a convex direction of the convex part are along the circumferential direction of the optical fiber assembly, and the convex part of one of two adjacent first metal wires is stuck into the concave part of the other; the second metal wires each have two opposite straight side wall surfaces, the straight side wall surfaces extend along the radial direction of the optical fiber assembly, and the straight side wall surfaces of two adjacent second metal wires fit each other. The flexible direct-current submarine cable of the present application has advantages of low production cost, high production efficiency and good performance of water-blocking.

## Claims

1. A flexible direct-current submarine cable, comprising a water-blocking conductor and an optical fiber assembly, wherein the water-blocking conductor is wrapped around an outer side of the optical fiber assembly along a circumferential direction;
the water-blocking conductor comprises a conductor core wrapped around the outer side of the optical fiber assembly, the conductor core comprises at least two conductor layers comprising a first conductor layer and a second conductor layer, the first conductor layer and the second conductor layer are alternately provided along a radial direction of the optical fiber assembly, the first conductor layer is formed by stranding a plurality of first metal wires arranged along the circumferential direction of the optical fiber assembly, the second conductor layer is formed by stranding a plurality of second metal wires arranged along the circumferential direction of the optical fiber assembly;
the first metal wires each have a concave part and a convex part arranged sequentially in the radial direction of the optical fiber assembly, and both a concave direction of the concave part and a convex direction of the convex part are along the circumferential direction of the optical fiber assembly, and the convex part of one of two adjacent first metal wires is stuck into the concave part of the other;
the second metal wires each have two straight side wall surfaces arranged opposite, the straight side wall surfaces extend along the radial direction of the optical fiber assembly, and the straight side wall surfaces of two adjacent second metal wires fit each other.

2. The flexible direct-current submarine cable according to claim 1, wherein, in adjacent first and second conductor layers, projection positions of the first metal wires and the second metal wires in a radial direction of the flexible direct-current submarine cable are staggered with each other.

3. The flexible direct-current submarine cable according to claim 2, wherein the first metal wires in adjacent first and second conductor layers are pressed against at least two adjacent second metal wires; or, the second metal wires in adjacent first and second conductor layers are pressed against at least two adjacent first metal wires.

4. The flexible direct-current submarine cable according to any one of claims 1-3, wherein stranding directions of adjacent first and second conductor layers are opposite.

5. The flexible direct-current submarine cable according to claim 4, wherein, in the at least two conductor layers, both the conductor layer in contact with the optical fiber assembly and the conductor layer located on a surface of the conductor core are the first conductor layer.

6. The flexible direct-current submarine cable according to claim 5, wherein the conductor core further comprises a third conductor layer that is a single-layer or a multi-layer, the third conductor layer is formed by stranding a plurality of third metal wires, and cross sections of the third metal wires in the radial direction of the flexible direct-current submarine cable are circular.

7. The flexible direct-current submarine cable according to claim 6, wherein the first metal wires in each first conductor layer are of the same shape and equal size, and the second metal wires in each second conductor layer are of the same shape and equal size.

8. The flexible direct-current submarine cable according to claim 7, wherein the concave part is a concave arc segment and the convex part is a convex arc segment; or
the concave part has a first extension segment extending in the radial direction of the flexible direct-current submarine cable, the convex part has a second extension segment extending in the radial direction of the flexible direct-current submarine cable, and the first extension segment and the second extension segment are parallel to each other.

9. The flexible direct-current submarine cable according to claim 8, wherein the first extension segment of the concave part is parallel to the second extension segment of the convex part;
the first metal wires each further comprise a transition segment connected between the first extension segment and the second extension segment, and an extension direction of the transition segment is perpendicular to an extension direction of the first extension segment.

10. The flexible direct-current submarine cable according to claim 8 or 9, wherein the optical fiber assembly comprises an optical fiber unit comprising a plurality of optical fibers, a first water-blocking filling unit and a first metal tube, the plurality of optical fibers are located in the first metal tube, the first water-blocking filling unit is filled between the plurality of optical fibers and the first metal tube, and the optical fibers are not in contact with the first metal tube.

11. The flexible direct-current submarine cable according to claim 10, wherein there are a plurality of optical fiber units, the plurality of optical fiber units comprise a first optical fiber unit located in a center of the water-blocking conductor and a plurality of second optical fiber units uniformly wrapped around the first optical fiber unit, a center of the first optical fiber unit coincides with a center of the optical fiber assembly, the second optical fiber units abut against the first optical fiber unit, and two adjacent second optical fiber units abut against each other.

12. The flexible direct-current submarine cable according to claim 11, wherein the optical fiber assembly further comprises a plurality of filling units, a second metal tube and a second water-blocking filling unit; the filling units are arranged corresponding to the second optical fiber units, and the filling units are located between adjacent second optical fiber units, the second metal tube are wrapped around outer sides of the plurality of filling units and of the optical fiber units, and the filling units and the second optical fiber units each abut against an inner wall of the second metal tube; the second water-blocking filling unit is filled between the plurality of optical fiber units, the plurality of filling units and the second metal tube.

13. The flexible direct-current submarine cable according to claim 12, wherein the optical fiber assembly further comprises a first water-blocking wrapping tape located inside the second metal tube.

14. The flexible direct-current submarine cable according to any one of claims 11-13, wherein the water-blocking conductor further comprises a second water-blocking wrapping tape wrapped around an outer side of the conductor core.

15. The flexible direct-current submarine cable according to claim 14, wherein the water-blocking conductor further comprises a protective layer wrapped around an outer side of the second water-blocking wrapping tape, and the protective layer is peelably arranged on the outer side of the second water-blocking wrapping tape layer.

## Patentansprüche

1. Flexibles Gleichstrom-Seekabel, umfassend einen wasserblockierenden Leiter und eine Lichtwellenleiteranordnung, wobei der wasserblockierende Leiter in einer Umfangsrichtung um eine Außenseite der Lichtwellenleiteranordnung gewickelt ist;
der wasserblockierende Leiter einen Leiterkern umfasst, der um die Außenseite der Lichtwellenleiteranordnung gewickelt ist, der Leiterkern mindestens zwei Leiterschichten umfasst, die eine erste Leiterschicht und eine zweite Leiterschicht umfassen, wobei die erste Leiterschicht und die zweite Leiterschicht in einer Radialrichtung der Lichtwellenleiteranordnung abwechselnd vorgesehen sind, die erste Leiterschicht durch Verseilen einer Mehrzahl von in der Umfangsrichtung der Lichtwellenleiteranordnung angeordneten ersten Metalldrähten gebildet ist, die zweite Leiterschicht durch Verseilen einer Mehrzahl von in der Umfangsrichtung der Lichtwellenleiteranordnung angeordneten zweiten Metalldrähten gebildet ist;
die ersten Metalldrähte jeweils einen konkaven Teil und einen konvexen Teil aufweisen, die in Radialrichtung der Lichtwellenleiteranordnung aufeinanderfolgend angeordnet sind, und sowohl eine konkave Richtung des konkaven Teils als auch eine konvexe Richtung des konvexen Teils in der Umfangsrichtung der Lichtwellenleiteranordnung verlaufen, und der konvexe Teil eines von zwei benachbarten ersten Metalldrähten in den konkaven Teil des anderen gesteckt ist;
die zweiten Metalldrähte jeweils zwei gerade Seitenwandflächen aufweisen, die einander gegenüberliegend angeordnet sind, wobei sich die geraden Seitenwandflächen in der Radialrichtung der Lichtwellenleiteranordnung erstrecken und die geraden Seitenwandflächen von zwei benachbarten zweiten Metalldrähten zueinander passen.

2. Flexibles Gleichstrom-Seekabel nach Anspruch 1, bei dem in benachbarten ersten und zweiten Leiterschichten Vorsprungspositionen der ersten Metalldrähte und der zweiten Metalldrähte in Radialrichtung des flexiblen Gleichstrom-Seekabels zueinander versetzt sind.

3. Flexibles Gleichstrom-Seekabel nach Anspruch 2, bei dem die ersten Metalldrähte in benachbarten ersten und zweiten Leiterschichten gegen mindestens zwei benachbarte zweite Metalldrähte gepresst sind; oder die zweiten Metalldrähte in benachbarten ersten und zweiten Leiterschichten gegen mindestens zwei benachbarte erste Metalldrähte gepresst sind.

4. Flexibles Gleichstrom-Seekabel nach einem der Ansprüche 1-3, bei dem die Verseilrichtungen von benachbarten ersten und zweiten Leiterschichten entgegengesetzt sind.

5. Flexibles Gleichstrom-Seekabel nach Anspruch 4, bei dem in den mindestens zwei Leiterschichten sowohl die Leiterschicht in Kontakt mit der Lichtwellenleiteranordnung als auch die Leiterschicht, die sich auf einer Oberfläche des Leiterkerns befindet, die erste Leiterschicht sind.

6. Flexibles Gleichstrom-Seekabel nach Anspruch 5, bei dem der Leiterkern ferner eine dritte Leiterschicht umfasst, die einlagig oder mehrlagig ist, wobei die dritte Leiterschicht durch Verseilen einer Mehrzahl dritter Metalldrähte gebildet ist und die Querschnitte der dritten Metalldrähte in der Radialrichtung des flexiblen Gleichstrom-Seekabels kreisförmig sind.

7. Flexibles Gleichstrom-Seekabel nach Anspruch 6, bei dem die ersten Metalldrähte in jeder ersten Leiterschicht die gleiche Form und Größe aufweisen und die zweiten Metalldrähte in jeder zweiten Leiterschicht die gleiche Form und Größe aufweisen.

8. Flexibles Gleichstrom-Seekabel nach Anspruch 7, bei dem der konkave Teil ein konkaves Bogensegment ist und der konvexe Teil ein konvexes Bogensegment ist; oder
der konkave Teil ein erstes Verlängerungssegment aufweist, das sich in Radialrichtung des flexiblen Gleichstrom-Seekabels erstreckt, der konvexe Teil ein zweites Verlängerungssegment aufweist, das sich in Radialrichtung des flexiblen Gleichstrom-Seekabels erstreckt, und das erste Verlängerungssegment und das zweite Verlängerungssegment parallel zueinander sind.

9. Flexibles Gleichstrom-Seekabel nach Anspruch 8, bei dem das erste Verlängerungssegment des konkaven Teils parallel zum zweiten Verlängerungssegment des konvexen Teils ist;
die ersten Metalldrähte ferner jeweils ein Übergangssegment umfassen, das zwischen dem ersten Verlängerungssegment und dem zweiten Verlängerungssegment verbunden ist, und eine Verlängerungsrichtung des Übergangssegments senkrecht zu einer Verlängerungsrichtung des ersten Verlängerungssegments ist.

10. Flexibles Gleichstrom-Seekabel nach Anspruch 8 oder 9, bei dem die Lichtwellenleiteranordnung eine Lichtwellenleitereinheit mit einer Mehrzahl von Lichtwellenleitern, eine erste wasserblockierende Fülleinheit und ein erstes Metallrohr umfasst, wobei die Mehrzahl von Lichtwellenleitern in dem ersten Metallrohr angeordnet ist, die erste wasserblockierende Fülleinheit zwischen der Mehrzahl von Lichtwellenleitern und dem ersten Metallrohr eingefüllt ist und die Lichtwellenleiter nicht in Kontakt mit dem ersten Metallrohr stehen.

11. Flexibles Gleichstrom-Seekabel nach Anspruch 10, das eine Mehrzahl von Lichtwellenleitereinheiten aufweist, wobei die Mehrzahl von Lichtwellenleitereinheiten eine erste Lichtwellenleitereinheit, die in einer Mitte des wasserblockierenden Leiters angeordnet ist, und eine Mehrzahl von zweiten Lichtwellenleitereinheiten umfasst, die gleichmäßig um die erste Lichtwellenleitereinheit gewickelt sind, wobei ein Zentrum der ersten Lichtwellenleitereinheit mit einem Zentrum der Lichtwellenleiteranordnung zusammenfällt, die zweiten Lichtwellenleitereinheiten an die erste Lichtwellenleitereinheit angrenzen und zwei benachbarte zweite Lichtwellenleitereinheiten aneinander angrenzen.

12. Flexibles Gleichstrom-Seekabel nach Anspruch 11, bei dem die Lichtwellenleiteranordnung ferner eine Mehrzahl von Fülleinheiten, ein zweites Metallrohr und eine zweite wasserblockierende Fülleinheit umfasst; die Fülleinheiten entsprechend den zweiten Lichtwellenleitereinheiten angeordnet sind und die Fülleinheiten sich zwischen benachbarten zweiten Lichtwellenleitereinheiten befinden, das zweite Metallrohr um die Außenseiten der Mehrzahl von Fülleinheiten und der Lichtleitfasereinheiten gewickelt sind und die Fülleinheiten und die zweiten Lichtleitfasereinheiten jeweils an einer Innenwand des zweiten Metallrohrs anliegen; und die zweite wasserblockierende Fülleinheit zwischen die Mehrzahl von Lichtleitfasereinheiten, die Mehrzahl von Fülleinheiten und das zweite Metallrohr eingefüllt ist.

13. Flexibles Gleichstrom-Seekabel nach Anspruch 12, bei dem die Lichtwellenleiteranordnung ferner ein erstes wasserblockierendes Umwicklungsband umfasst, das sich im Inneren des zweiten Metallrohrs befindet.

14. Flexibles Gleichstrom-Seekabel nach einem der Ansprüche 11 bis 13, bei dem der wasserblockierende Leiter ferner ein zweites wasserblockierendes Umwicklungsband umfasst, das um eine Außenseite des Leiterkerns gewickelt ist.

15. Flexibles Gleichstrom-Seekabel nach Anspruch 14, bei dem der wasserblockierende Leiter ferner eine Schutzschicht umfasst, die um eine Außenseite des zweiten wasserblockierenden Umwicklungsbandes gewickelt ist, und die Schutzschicht abziehbar auf der Außenseite der zweiten wasserblockierenden Umwicklungsbandschicht angeordnet ist.

## Revendications

1. Câble sous-marin à courant continu flexible, comprenant un conducteur de blocage d'eau et un ensemble fibre optique, dans lequel le conducteur de blocage d'eau est enroulé autour d'un côté extérieur de l'ensemble fibre optique le long d'une direction circonférentielle ;
le conducteur de blocage d'eau comprend un noyau de conducteur enroulé autour du côté extérieur de l'ensemble fibre optique, le noyau de conducteur comprend au moins deux couches de conducteur comprenant une première couche de conducteur et une deuxième couche de conducteur, la première couche de conducteur et la deuxième couche de conducteur sont fournies en alternance le long d'une direction radiale de l'ensemble fibre optique, la première couche de conducteur est formée en toronnant une pluralité de premiers fils métalliques agencés le long de la direction circonférentielle de l'ensemble fibre optique, la deuxième couche de conducteur est formée en toronnant une pluralité de deuxièmes fils métalliques agencés le long de la direction circonférentielle de l'ensemble fibre optique ;
les premiers fils métalliques présentent chacun une partie concave et une partie convexe agencées séquentiellement dans la direction radiale de l'ensemble fibre optique, et à la fois une direction concave de la partie concave et une direction convexe de la partie convexe sont le long de la direction circonférentielle de l'ensemble fibre optique, et la partie convexe de l'un de deux premiers fils métalliques adjacents est insérée dans la partie concave de l'autre ;
les deuxièmes fils métalliques présentent chacun deux surfaces de paroi latérale droite agencées à l'opposé, les surfaces de paroi latérale droite s'étendent le long de la direction radiale de l'ensemble fibre optique, et les surfaces de paroi latérale droite de deux deuxièmes fils métalliques adjacents s'adaptent l'une à l'autre.

2. Câble sous-marin à courant continu flexible selon la revendication 1, dans lequel, dans des première et deuxième couches de conducteur adjacentes, des positions de projection des premiers fils métalliques et des deuxièmes fils métalliques dans une direction radiale du câble sous-marin à courant continu flexible sont décalées les unes par rapport aux autres.

3. Câble sous-marin à courant continu flexible selon la revendication 2, dans lequel les premiers fils métalliques dans des première et deuxième couches de conducteur adjacentes sont pressés contre au moins deux deuxièmes fils métalliques adjacents ; ou les deuxièmes fils métalliques dans des première et deuxième couches de conducteur adjacentes sont pressés contre au moins deux premiers fils métalliques adjacents.

4. Câble sous-marin à courant continu flexible selon l'une quelconque des revendications 1 à 3, dans lequel les directions de toronnage des première et deuxième couches de conducteur adjacentes sont opposées.

5. Câble sous-marin flexible à courant continu selon la revendication 4, dans lequel, dans les au moins deux couches de conducteur, à la fois la couche de conducteur en contact avec l'ensemble fibre optique et la couche de conducteur située sur une surface du noyau de conducteur sont la première couche de conducteur.

6. Câble sous-marin à courant continu flexible selon la revendication 5, dans lequel le noyau de conducteur comprend en outre une troisième couche de conducteur qui est une monocouche ou une multicouche, la troisième couche de conducteur est formée en toronnant une pluralité de troisièmes fils métalliques, et les sections transversales des troisièmes fils métalliques dans la direction radiale du câble sous-marin à courant continu flexible sont circulaires.

7. Câble sous-marin à courant continu flexible selon la revendication 6, dans lequel les premiers fils métalliques dans chaque première couche de conducteur ont la même forme et la même taille, et les deuxièmes fils métalliques dans chaque deuxième couche de conducteur ont la même forme et la même taille.

8. Câble sous-marin à courant continu flexible selon la revendication 7, dans lequel la partie concave est un segment d'arc concave et la partie convexe est un segment d'arc convexe ; ou
la partie concave présente un premier segment d'extension s'étendant dans la direction radiale du câble sous-marin flexible à courant continu, la partie convexe présente un second segment d'extension s'étendant dans la direction radiale du câble sous-marin à courant continu flexible, et le premier segment d'extension et le second segment d'extension sont parallèles l'un à l'autre.

9. Câble sous-marin flexible à courant continu selon la revendication 8, dans lequel le premier segment d'extension de la partie concave est parallèle au second segment d'extension de la partie convexe ;
les premiers fils métalliques comprennent chacun en outre un segment de transition connecté entre le premier segment d'extension et le second segment d'extension, et une direction d'extension du segment de transition est perpendiculaire à une direction d'extension du premier segment d'extension.

10. Câble sous-marin à courant continu flexible selon la revendication 8 ou 9, dans lequel l'ensemble fibre optique comprend une unité de fibres optiques comprenant une pluralité de fibres optiques, une première unité de remplissage de blocage d'eau et un premier tube métallique, la pluralité de fibres optiques sont situées dans le premier tube métallique, la première unité de remplissage de blocage d'eau est insérée entre la pluralité de fibres optiques et le premier tube métallique, et les fibres optiques ne sont pas en contact avec le premier tube métallique.

11. Câble sous-marin à courant continu flexible selon la revendication 10, dans lequel il y a une pluralité d'unités de fibres optiques, la pluralité d'unités de fibres optiques comprend une première unité de fibres optiques située dans un centre du conducteur de blocage d'eau et une pluralité de secondes unités de fibres optiques enroulées uniformément autour de la première unité de fibres optiques, un centre de la première unité de fibres optiques coïncide avec un centre de l'ensemble de fibres optiques, les secondes unités de fibres optiques viennent en butée contre la première unité de fibres optiques, et deux secondes unités de fibres optiques adjacentes viennent en butée l'une contre l'autre.

12. Câble sous-marin à courant continu flexible selon la revendication 11, dans lequel l'ensemble fibre optique comprend en outre une pluralité d'unités de remplissage, un second tube métallique et une seconde unité de remplissage de blocage d'eau ; les unités de remplissage sont agencées de manière à correspondre aux secondes unités de fibres optiques, et les unités de remplissage sont situées entre des secondes unités de fibres optiques adjacentes, le second tube métallique est enroulé autour de côtés externes de la pluralité d'unités de remplissage et des unités de fibres optiques, et les unités de remplissage et les secondes unités de fibres optiques viennent chacune en butée contre une paroi interne du second tube métallique ; la seconde unité de remplissage de blocage d'eau est insérée entre la pluralité d'unités de fibres optiques, la pluralité d'unités de remplissage et le second tube métallique.

13. Câble sous-marin à courant continu flexible selon la revendication 12, dans lequel l'ensemble fibre optique comprend en outre un premier ruban d'emballage de blocage d'eau situé à l'intérieur du second tube métallique.

14. Câble sous-marin à courant continu flexible selon l'une quelconque des revendications 11 à 13, dans lequel le conducteur de blocage d'eau comprend en outre un second ruban d'enroulement de blocage d'eau enroulé autour d'un côté extérieur du noyau de conducteur.

15. Câble sous-marin à courant continu flexible selon la revendication 14, dans lequel le conducteur de blocage d'eau comprend en outre une couche de protection enroulée autour d'un côté extérieur du second ruban d'emballage de blocage d'eau, et la couche de protection est agencée de manière pelable sur le côté extérieur de la seconde couche de ruban d'emballage de blocage d'eau.
